# EUROPEAN PATENT SPECIFICATION

(11) **EP 4 043 250 B1**
(45) Date of publication and mention of the grant of the patent: **30.07.2025**
(21) Application number: 21878758.8
(22) Date of filing: 15.06.2021
(51) Int. Cl.: B60H 1/00, B60H 1/06, B60H 1/32, B60K 1/00, B60K 11/02, B60L 1/00, B60L 1/02, B60L 58/26, B60L 58/27, H01M 10/613, H01M 10/615, H01M 10/625, H01M 10/6568, H01M 10/66, H01M 10/663

(54) **VEHICLE THERMAL MANAGEMENT SYSTEM, AND VEHICLE**
FAHRZEUGWÄRMESTEUERUNGSSYSTEM UND FAHRZEUG
SYSTÈME DE GESTION THERMIQUE DE VÉHICULE ET VÉHICULE

(30) Priority: 30.10.2020 CN 202011192718
(43) Date of publication of application: 17.08.2022
(73) Proprietor: Mind Electronics Appliance Co., Ltd., Baoding City, Hebei 072550 (CN)
(72) Inventor: BENOUALI, Jugurtha, Baoding City, Hebei 072550 (CN)
(74) Representative: IPecunia
(86) International application number: PCT/CN2021/100147
(87) International publication number: WO 2022/088689

(56) References cited:
- WO-A1-2008/034828
- WO-A1-2016/096501
- WO-A1-2018/069629
- CN-A- 111 231 618
- CN-A- 111 231 620
- CN-A- 111 231 656
- CN-A- 111 823 809
- DE-A1- 102019 132 689
- FR-A1- 2 976 224
- US-A1- 2019 263 223
- US-B2- 9 511 645

## Description

### TECHNICAL FIELD

The invention relates to the technical field of vehicle thermal management systems, in particular to a vehicle thermal management system and a vehicle.

### BACKGROUND

A vehicle thermal management system generally includes an air conditioner thermal management system, a motor thermal management system, and a battery thermal management system. For the air conditioner thermal management system, when an ambient temperature is low, the heating capacity of an air conditioner is poor, and it is usually difficult to meet the heating demand of a passenger compartment; for the motor thermal management system, a motor will generate heat in the process of driving a vehicle, and in order to ensure the normal operation of the motor, the motor needs to be cooled for heat dissipation; and for the battery thermal management system, in order to ensure that battery packs can work within its suitable temperature range, it is necessary to cool a battery pack with excessive high temperature and heat a battery pack with excessive low temperature.

Since the existing air conditioner thermal management system, motor thermal management system, and battery thermal management system operate independently of each other, on one hand, the heat collection planning of the vehicle thermal management system will be unreasonable, resulting in waste of energy, and on the other hand, the quantities of pipelines, valves, joints and other components of the vehicle thermal management system will increase, resulting in an increase in cost.

WO2016096501A1 relates to a heat system for an electric or hybrid vehicle, which can be operated in multiple operating modes, and which has a cooling circuit having a cooling unit and a heating heat exchanger for heating the interior, which is parallel connected to the cooling unit, for forming a heating circuit. At least one heat source is arranged in the cooling circuit for heat output to the cooling circuit. In addition, a refrigeration circuit for heat exchange with the cooling circuit by way of a capacitor, and an evaporator circuit, which can introduce heat to the refrigeration circuit by way of the evaporator, is formed.

WO2018069629A1 relates to a thermal conditioning facility for the interior and/or at least one part of a motor vehicle, comprising a first circuit for the circulation of a heat-transfer fluid, a second circuit for the circulation of a refrigerant fluid, which can form a heat-pump-type circuit, the heat-transfer fluid circuit comprising means for heating and/or cooling at least one part of a motor vehicle, means for storing calories and/or frigories, a first exchanger that forms an evaporator and can exchange heat with the refrigerant fluid circuit, and means for circulating heat-transfer fluid, which can draw on the frigories and/or calories from the storage means or the first exchanger, in such a way as to transfer them to the heating and/or cooling means.

DE102019132689A1 relates to a heat management system for a motor vehicle, having a cooling circuit in which a chiller and at least one control unit that can flow through coolant is arranged. The control unit is arranged upstream of the chiller in the cooling circuit. A cooling circuit can be transported by thermal energy from the chiller to a condenser, and a heating line which is permeable by coolant and in which the condenser and an interior heat exchanger are arranged.

US20190263223A1 relates to a climate control system for conditioning the air of a motor vehicle passenger compartment. The climate control system, developed for operation in chiller mode, in heat pump mode as well as in reheat mode, comprises a climate control unit with a housing with a first flow channel and a second flow channel for conducting air, a refrigerant circulation as well as a first coolant circulation and a second coolant circulation. The refrigerant circulation is implemented with a refrigerant-air heat exchanger, operable as evaporator independently of the operating mode, which refrigerant-air heat exchanger is disposed within the housing of the climate control unit, as well as with a first refrigerant-coolant heat exchanger, operable as condenser/gas cooler independently of the operating mode, and a second refrigerant-coolant heat exchanger, operable as evaporator independently of the operating mode, which are disposed outside of the housing of the climate control unit. The first coolant circulation comprises the second refrigerant-coolant heat exchanger and heat exchangers for conditioning components of a power train as well as a battery heat exchanger, while the second coolant circulation is implemented with the first refrigerant-coolant heat exchanger as well as with a heating heat exchanger disposed within the housing of the climate control unit.

US9511645B2 provides a multi-mode vehicle thermal management system that allows efficient thermal communication between a refrigerant-based thermal control loop and three non-refrigerant-based thermal control loops, where one of the non-refrigerant-based loops provides temperature control over the vehicle's passenger cabin, a second of the non-refrigerant-based control loops is thermally coupled to the vehicle's battery system and the third of the non-refrigerant-based control circuits is thermally coupled to the vehicle's drive train. The refrigerant-based control loop may be operated either in a heating mode or a cooling mode and is coupled to the vehicle's HVAC system using a refrigerant-air heat exchanger, and to one or more of the non-refrigerant-based control loops using refrigerant-fluid heat exchangers. A valve assembly is used to couple and/or decouple the battery and drive train thermal control loops, thereby allowing these two thermal control loops to operate either in parallel or in series.

### SUMMARY

An objective of the invention is to provide a vehicle thermal management system and a vehicle using the vehicle thermal management system so as to solve the problems existing in the related art.

In order to achieve the above objective, the invention provides, as defined in claim 1, a vehicle thermal management system, including a coolant loop, a first coolant flow path, a second coolant flow path, a third coolant flow path, a first heat exchanger and a second heat exchanger;
a first end of the first coolant flow path, a first end of the second coolant flow path and a first end of the third coolant flow path are connected with each other, and a second end of the third coolant flow path is selectively connected with a second end of the first coolant flow path or a second end of the second coolant flow path; and
a motor is disposed on the first coolant flow path, a battery pack is disposed on the second coolant flow path, a first water pump is disposed on the third coolant flow path, the first heat exchanger is simultaneously disposed on the third coolant flow path and an air conditioning system of the vehicle thermal management system, the second heat exchanger is simultaneously disposed on the coolant loop and the air conditioning system, and a second water pump and a warm air core are further disposed on the coolant loop.

The vehicle thermal management system includes a first three-way valve, a port A of the first three-way valve is connected with the second end of the first coolant flow path, a port B of the first three-way valve is connected with the second end of the second coolant flow path, and a port C of the first three-way valve is connected with the second end of the third coolant flow path.

The vehicle thermal management system further includes a fourth coolant flow path and a second three-way valve, and a radiator and a third water pump are disposed on the fourth coolant flow path; and
the second three-way valve is disposed on the coolant loop, the coolant loop includes a first section and a second section, the second heat exchanger is simultaneously disposed on the second section and the air conditioning system, the warm air core and the second water pump are disposed on the first section, a first end of the first section is connected with a first end of the second section, a second end of the first section is connected with a port A of the second three-way valve, a second end of the second section is connected with a port B of the second three-way valve, a first end of the fourth coolant flow path is connected with the first end of the first section, the first end of the second section, the first end of the third coolant flow path, the first end of the second coolant flow path and the first end of the first coolant flow path, and a second end of the fourth coolant flow path is connected with a port C of the second three-way valve, the port A of the first three-way valve and the second end of the first coolant flow path.

The first end of the second coolant flow path and the first end of the third coolant flow path are connected with the first end of the first coolant flow path and the first end of the fourth coolant flow path through a second on-off valve, and the first end of the first section and the first end of the second section are connected with the first end of the first coolant flow path and the first end of the fourth coolant flow path through a third on-off valve.

Optionally, the first end of the first coolant flow path is connected with the first end of the second coolant flow path, the first end of the third coolant flow path, the first end of the first section, the first end of the second section and the first end of the fourth coolant flow path via a fifth coolant flow path that is selectively turned on or off; or,
the second end of the first coolant flow path is connected with the port A of the first three-way valve, the port C of the two-three-way valve and the second end of the fourth coolant flow path via the fifth coolant flow path that is selectively turned on or off.

Optionally, a first on-off valve is disposed on the fifth coolant flow path.

Optionally, a check valve is disposed at an outlet of the radiator.

Not according to the invention, optionally, the motor is disposed on the second coolant flow path, the vehicle thermal management system further includes a short-circuit flow path in parallel with the motor, and a fourth on-off valve is disposed on the short-circuit flow path.

Optionally, a heater is further disposed on the coolant loop.

Optionally, an electronic device is further disposed on the first coolant flow path.

Optionally, the electronic device includes at least one of a charger, a motor controller, or a DC-DC converter.

According to another aspect of the invention, as defined in claim 8, a vehicle is provided, including the above vehicle thermal management system.

Through the above technical solutions, the vehicle thermal management system provided by the invention can utilize cold energy or heat of the air conditioning system to cool or heat the battery pack and/or motor through the first heat exchanger, so as to ensure that the battery pack and/or the motor can work within its suitable temperature range, and can also utilize heat of the motor to increase an enthalpy of a refrigerant in the air conditioning system and improve the suction temperature and suction pressure of a compressor through the first heat exchanger, thereby improving the heating capacity of the air conditioning system in low temperature environments. The vehicle thermal management system provided by the invention can also utilize heat of the air conditioning system to heat the warm air core through the second heat exchanger, so as to achieve the purpose of heating a passenger compartment. In other words, the vehicle thermal management system provided by the invention achieves heat exchange among the air conditioning system, the battery pack, the motor, and the warm air core, the vehicle heat collection planning is reasonable, and the waste of energy is avoided.

Other features and advantages of the invention will be described in detail in subsequent specific embodiments.

### BRIEF DESCRIPTION OF THE DRAWINGS

The accompanying drawings are used to provide a further understanding of the invention, and constitute a part of the specification, and together with the following specific embodiments, are used to explain the invention, but do not constitute a limitation to the invention. In the accompanying drawings:

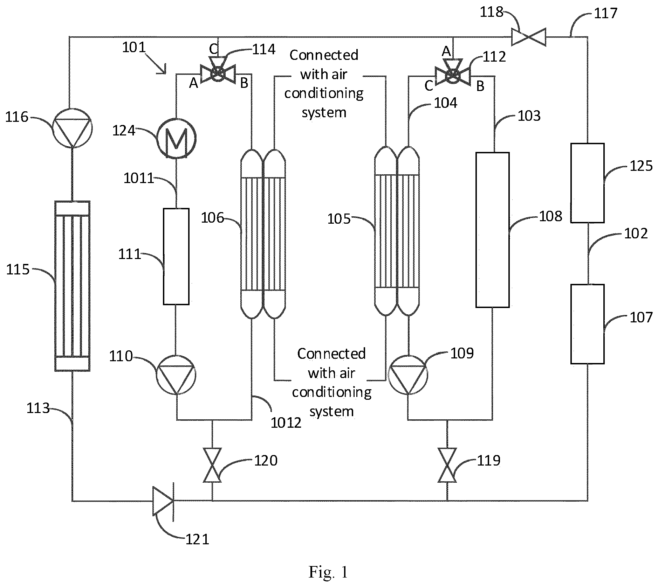

Fig. 1 is a schematic structural diagram of a vehicle thermal management system provided by an embodiment of the invention.

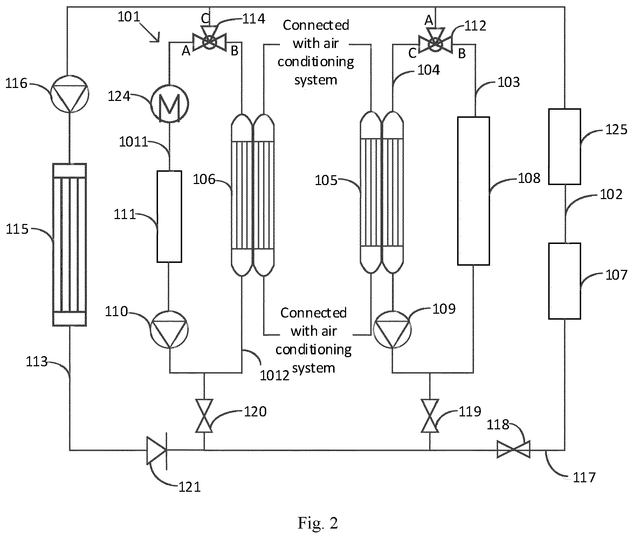

Fig. 2 is a schematic structural diagram of a vehicle thermal management system provided by another embodiment of the invention.

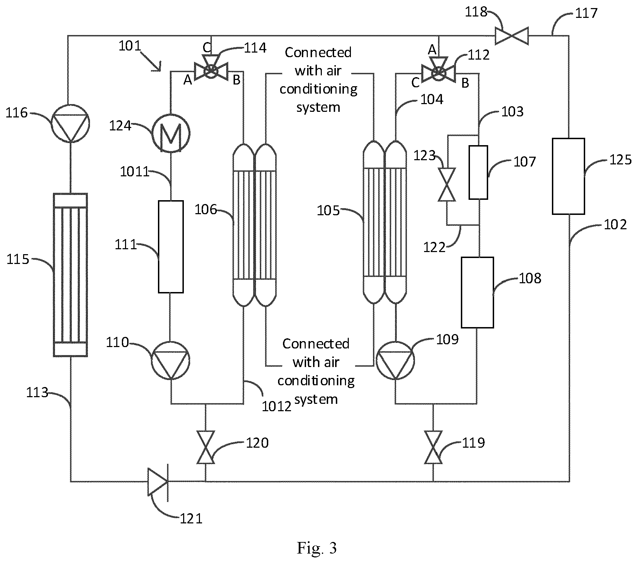

Fig. 3 is a schematic structural diagram of a vehicle thermal management system not according to the invention.

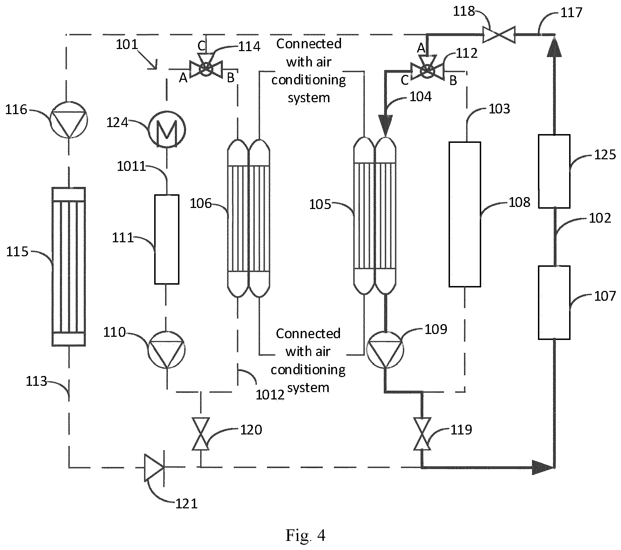

Fig. 4 is a schematic structural diagram of a vehicle thermal management system provided by an embodiment of the invention, where the vehicle thermal management system is in a waste heat recycling mode, and thick solid lines and arrows in the figure indicate flow paths and flow directions of a coolant in this mode.

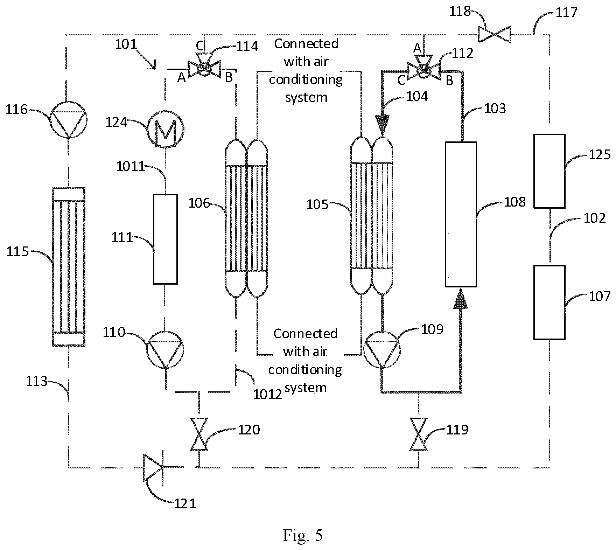

Fig. 5 is a schematic structural diagram of a vehicle thermal management system provided by an embodiment of the invention, where the vehicle thermal management system is in an active battery pack cooling or heating mode, and thick solid lines and arrows in the figure indicate flow paths and flow directions of a coolant in this mode.

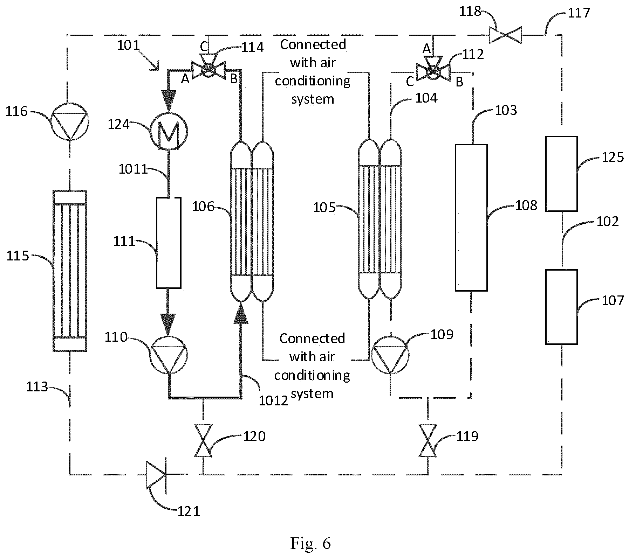

Fig. 6 is a schematic structural diagram of a vehicle thermal management system provided by an embodiment of the invention, where the vehicle thermal management system is in a mode of heating a passenger compartment by an air conditioning system or a mode of heating the passenger compartment by a heater, and thick solid lines and arrows in the figure indicate flow paths and flow directions of a coolant in this mode.

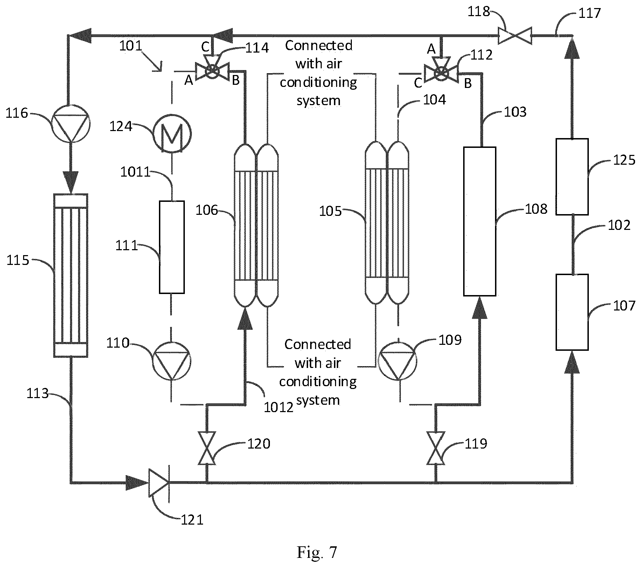

Fig. 7 is a schematic structural diagram of a vehicle thermal management system provided by an embodiment of the invention, where the vehicle thermal management system is in a passive cooling mode, and thick solid lines and arrows in the figure indicate flow paths and flow directions of a coolant in this mode.

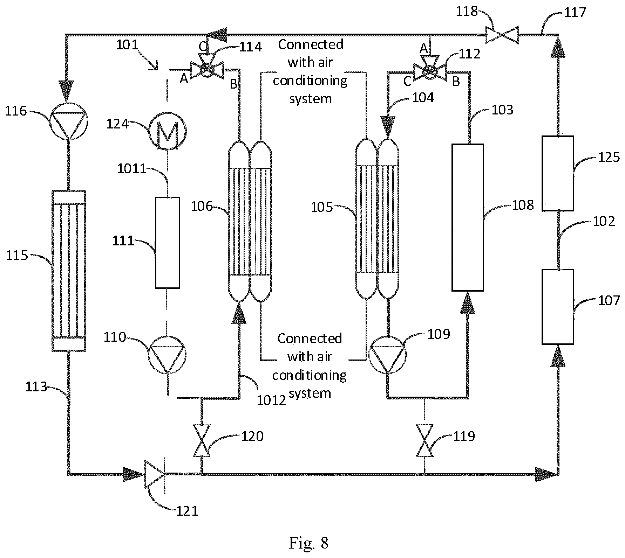

Fig. 8 is a schematic structural diagram of a vehicle thermal management system provided by an embodiment of the invention, where the vehicle thermal management system is in a passive cooling mode of a hybrid mode of passive cooling of a second heat exchanger, a motor and an electronic device and active cooling of a battery pack, and thick solid lines and arrows in the figure indicate flow paths and flow directions of a coolant in this mode.

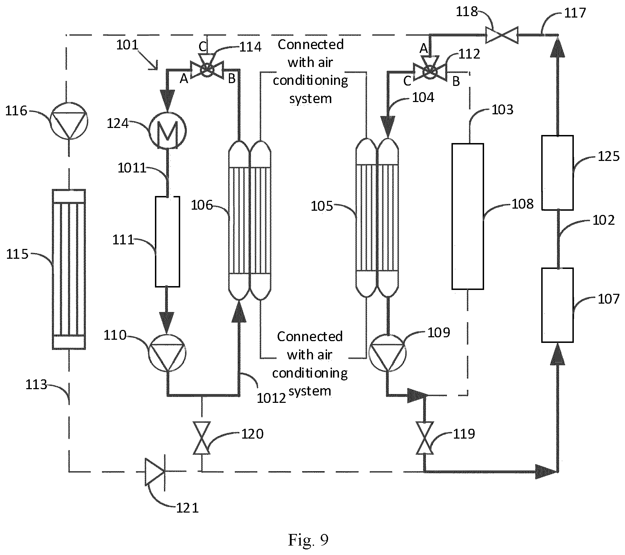

Fig. 9 is a schematic structural diagram of a vehicle thermal management system provided by an embodiment of the invention, where the vehicle thermal management system is in a hybrid mode of heating a passenger compartment by an air conditioning system and recycling waste heat or a hybrid mode of heating the passenger compartment by a heater and recycling waste heat, and thick solid lines and arrows in the figure indicate flow paths and flow directions of a coolant in this mode.

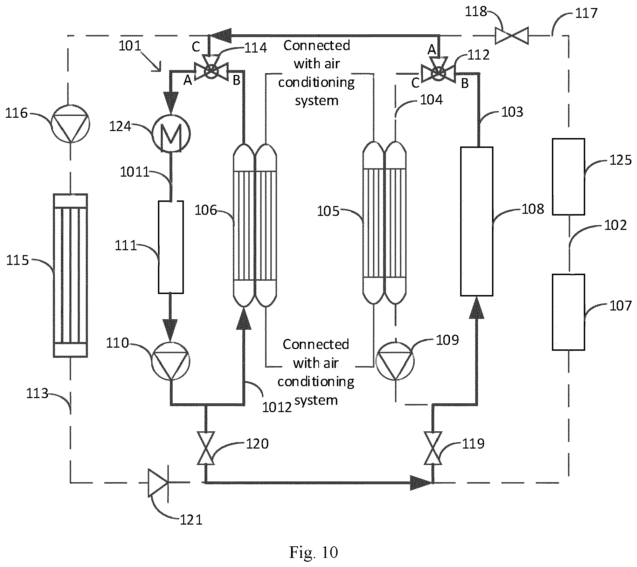

Fig. 10 is a schematic structural diagram of a vehicle thermal management system provided by an embodiment of the invention, where the vehicle thermal management system is in a mode of heating a passenger compartment and a battery pack by a heater, and thick solid lines and arrows in the figure indicate flow paths and flow directions of a coolant in this mode.

### REFERENCE NUMERALS

101-Coolant loop; 1011-First section; 1012-Second section; 102-First coolant flow path; 103-Second coolant flow path; 104-Third coolant flow path; 105-First heat exchanger; 106-Second heat exchanger; 107-Motor; 108-Battery pack; 109-First water pump; 110-Second water pump; 111-Warm air core; 112-First three-way valve; 113-Fourth coolant flow path; 114-Second three-way valve; 115-Radiator; 116-Third water pump; 117-Fifth coolant flow path; 118-First on-off valve; 119-Second on-off valve; 120-Third on-off valve; 121-Check valve; 122-Short-circuit flow path; 123-Fourth on-off valve; 124-Heater; and 125-Electronic device.

### DETAILED DESCRIPTION

The specific embodiments of the invention will be described in detail below with reference to the accompanying drawings.

As shown in Fig. 1 to Fig. 10, the invention provides a vehicle thermal management system, including a coolant loop 101, a first coolant flow path 102, a second coolant flow path 103, a third coolant flow path 104, a first heat exchanger 105 and a second heat exchanger 106. A first end of the first coolant flow path 102, a first end of the second coolant flow path 103, and a first end of the third coolant flow path 104 are connected with each other, and a second end of the third coolant flow path 104 is selectively connected with a second end of the first coolant flow path 102 or a second end of the second coolant flow path 103, that is, the third coolant flow path 104 may selectively form a loop with the second coolant flow path 103 or form a loop with the first coolant flow path 102. A motor 107 is disposed on the first coolant flow path 102, a battery pack 108 is disposed on the second coolant flow path 103, that is, the motor 107 is connected in parallel with the battery pack 108, or, not according to the invention, may be connected in series with the battery pack 108. A first water pump 109 is disposed on the third coolant flow path 104, the first heat exchanger 105 is simultaneously disposed on the third coolant flow path 104 and an air conditioning system of the vehicle thermal management system, the second heat exchanger 106 is simultaneously disposed on the coolant loop 101 and the air conditioning system, and a second water pump 110 and a warm air core 111 are further disposed on the coolant loop 101.

Referring to Fig. 4, for an example in which the motor 107 is disposed on the first coolant flow path 102, when the third coolant flow path 104 is connected with the first coolant flow path 102, the first heat exchanger 105 located on the third coolant flow path 104, the first water pump 109 and the motor 107 located on the first coolant flow path 102 are connected in series to form a loop, and the first water pump 109 makes a coolant circulate in the loop. Since the first heat exchanger 105 is also simultaneously located in the air conditioning system, a coolant in the first heat exchanger 105 may exchange heat with a refrigerant in the air conditioning system. In this way, when a temperature of the motor 107 rises and a heat dissipation demand is needed, the coolant may flow through the motor 107 to absorb the heat of the motor 107, and the motor 107 is subjected to heat dissipation and cooled, the high-temperature coolant with the temperature rising flows into the first heat exchanger 105, and heat in the first heat exchanger 105 is released to the refrigerant in the air conditioning system, so as to increase an enthalpy of the refrigerant and increase the temperature of the refrigerant. When the air conditioning system is in a heating condition, if the ambient temperature is low, the heat absorbed by the refrigerant from the environment is limited, and the use of the heat of the motor 107 to increase the enthalpy of the refrigerant may help to increase the temperature of the refrigerant and improve the suction temperature and suction pressure of an engine, so that the heating capacity of the air conditioning system in low temperature environments is improved.

Referring to Fig. 5, for an example in which the motor 107 is disposed on the first coolant flow path 102, when the third coolant flow path 104 is connected with the second coolant flow path 103, the first heat exchanger 105 located on the third coolant flow path 104, the first water pump 109 and the battery pack 108 located on the second coolant flow path 103 are connected in series to form a loop, and the first water pump 109 makes a coolant circulate in the loop. Since the first heat exchanger 105 is also simultaneously located in the air conditioning system, the coolant in the first heat exchanger 105 may exchange heat with the refrigerant in the air conditioning system, that is, the coolant in the first heat exchanger 105 may absorb the heat of the refrigerant or release heat to the refrigerant, so that a low-temperature coolant or a high-temperature coolant flows out of a coolant outlet of the first heat exchanger 105, and may flow into the second coolant flow path 103 under the action of the first water pump 109, thereby cooling or heating the battery pack 108 disposed on the second coolant flow path 103, so as to achieve the purpose of heating or cooling the battery pack 108 by using the cold energy of the air conditioning system. For an example not according to the invention in which the motor 107 is disposed on the second coolant flow path 103, when the third coolant flow path 104 is connected with the second coolant flow path 103, the first heat exchanger 105, the first water pump 109, the battery pack 108 and the motor 107 may be connected in series to form a loop, so that cooling or heating of the battery pack 108 and the motor 107 is achieved at the same time.

Referring to Fig. 6, since the second heat exchanger 106 is simultaneously disposed on the air conditioning system and the coolant loop 101, a coolant in the coolant loop 101 may exchange heat with the air conditioning system through the second heat exchanger 106, when a passenger compartment has a heating demand, a coolant in the second heat exchanger 106 may absorb the heat of a refrigerant, so that the high-temperature coolant flows out of a coolant outlet of the second heat exchanger 106 and flows into the warm air core 111, and by blowing air to the warm air core 111, the air passing through the warm air core 111 may be heated and flow into the passenger compartment, thereby achieving the heating of the passenger compartment.

Through the above technical solutions, the vehicle thermal management system provided by the invention can utilize cold energy or heat of the air conditioning system to cool or heat the battery pack 108 and/or motor 107 through the first heat exchanger 105, so as to ensure that the battery pack 108 and/or the motor 107 can work within its suitable temperature range, and can also utilize heat of the motor 107 to increase the enthalpy of the refrigerant in the air conditioning system and improve the suction temperature and suction pressure of a compressor through the first heat exchanger 105, thereby improving the heating capacity of the air conditioning system in low temperature environments. The vehicle thermal management system provided by the invention can also utilize the heat of the air conditioning system to heat the warm air core 111 through the second heat exchanger 106, so as to achieve the purpose of heating the passenger compartment. In other words, the vehicle thermal management system provided by the invention achieves heat exchange among the air conditioning system, the battery pack 108, the motor 107, and the warm air core 111, the vehicle heat collection planning is reasonable, and the waste of energy is avoided.

Optionally, an electronic device 125 may also be disposed on the first coolant flow path 102, so that when the third coolant flow path 104 is connected with the first coolant flow path 102, the electronic device 125 may also be cooled. Here, the electronic device 125 refers to a device that needs to use electricity to work and generates heat during operation. For example, the electronic device 125 may include at least one of a charger, a motor controller, or a DC-DC converter.

Optionally, as shown in Fig. 1 to Fig. 3, a heater 124 may also be disposed on the coolant loop 101, so that the coolant in the coolant loop 101 may not only utilize the heat of the air conditioning system to be heated through the second heat exchanger 106, but also be heated by the heater 124 (refer to Fig. 6), and then when the passenger compartment is heated by the warm air core 111, whether to use the heat of the air conditioning system to heat the passenger compartment or to use the heater 124 to heat the passenger compartment may be selected according to a current temperature and/or the heating requirement, etc. of the passenger compartment.

Optionally, the heater 124 may be any type of heater 124 capable of heating the coolant. For example, the heater 124 may be a PTC heater or a high voltage coolant heater (HVCH 124), and the invention does not limit the specific type of the heater 124.

In order to achieve that the second end of the third coolant flow path 104 is selectively connected with the second end of the first coolant flow path 102 and the second end of the second coolant flow path 103 described above, in an exemplary embodiment provided by the invention, as shown in Fig. 1 to Fig. 3, the vehicle thermal management system further includes a first three-way valve 112, a port A of the first three-way valve 112 is connected with the second end of the first coolant flow path 102, a port B of the first three-way valve 112 is connected with the second end of the second coolant flow path 103, and a C port of the first three-way valve 112 is connected with the second end of the third coolant flow path 104. When the port A and the port C of the first three-way valve 112 are communicated, the first coolant flow path 102 and the third coolant flow path 104 may be connected in series to form a loop; when the port B and the port C of the first three-way valve 112 are communicated, the second coolant flow path 103 and the third coolant flow path 104 may be connected in series to form a loop; when the port A and the port C of the first three-way valve 112 are communicated, and the port B and the port C are communicated, the first coolant flow path 102 and the third coolant flow path 104 may be connected in series to form a loop, the second coolant flow path 103 and the third coolant flow path 104 may be connected in series to form another loop, and the coolant flow path 102 and the second coolant flow path 103 are connected in parallel with each other.

In other embodiments, the second end of the first coolant flow path 102 may be connected with the second end of the third coolant flow path 104 through an on-off valve, and the second end of the second coolant flow path 103 may be connected with the second end of the third coolant flow path 104 through an on-off valve; when the on-off valve between the second end of the first coolant flow path 102 and the third coolant flow path 104 is turned on, the first coolant flow path 102 and the third coolant flow path 104 are connected in series to form a loop; and when the on-off valve between the second end of the second coolant flow path 103 and the second end of the third coolant flow path 104 is turned on, the second coolant flow path 103 and the third coolant flow path 104 are connected in series to form a loop.

In addition, in order to provide another heat dissipation and cooling manner for the battery pack 108, the motor 107, the electronic device 125, etc., as shown in Fig. 1 to Fig. 3, the vehicle thermal management system further includes a fourth coolant flow path 113 and a second three-way valve 114, and a radiator 115 and a third water pump 116 are disposed on the fourth coolant flow path 113. The second three-way valve 114 is disposed on the coolant loop 101, the coolant loop 101 includes a first section 1011 and a second section 1012, the second heat exchanger 106 is simultaneously disposed on the second section 1012 and the air conditioning system, the warm air core 111 and the second water pump 110 are disposed on the first section 1011, a first end of the first section 1011 is connected with a first end of the second section 1012, a second end of the first section 1011 is connected with a port A of the second three-way valve 114, a second end of the second section 1012 is connected with a port B of the second three-way valve 114, a first end of the fourth coolant flow path 113 is connected with the first end of the first section 1011, the first end of the second section 1012, the first end of the third coolant flow path 104, the first end of the second coolant flow path 103 and the first end of the first coolant flow path 102, and a second end of the fourth coolant flow path 113 is connected with a port C of the second three-way valve 114, the port A of the first three-way valve 112 and the second end of the first coolant flow path 102. By controlling the first three-way valve 112 and the second three-way valve 114, the second heat exchanger 106, the battery pack 108, and the motor 107 and the electronic device 125 disposed on the first coolant flow path 102 may be subjected to heat dissipation and cooled through the radiator 115.

Specifically, as shown in Fig. 7, by making the port A and the port B of the first three-way valve 112 communicated, and the port B and the port C of the second three-way valve 114 communicated, the fourth coolant flow path 113 and the second section 1012 of the coolant loop 101 are connected in series to form a loop, the fourth coolant flow path 113 and the second coolant flow path 103 are connected in series to form another loop, the fourth coolant flow path 113 and the first coolant flow path 102 are connected in series to form another loop, and the second section 1012 of the coolant loop 101, the second coolant flow path 103, and the first coolant flow path 102 are connected in parallel with each other. The low-temperature coolant after heat dissipation and cooling by the radiator 115 may be divided into three streams, one stream flows into the first coolant flow path 102 to absorb the heat of the motor 107 and the electronic device 125 disposed on the first coolant flow path 102, one stream flows into the second coolant flow path 103 to absorb the heat of the battery pack 108 disposed on the second coolant flow path 103, one stream flows into the second heat exchanger 106 on the second section 1012 of the coolant loop 101 to absorb the heat of the refrigerant of the air conditioning system in the second heat exchanger 106, so as to reduce the temperature of the refrigerant, and the high-temperature coolants flowing out of the first end of the first coolant flow path 102, the first end of the second coolant flow path 103, and the first end of the second section 1012 converge and then return to the radiator 115, so that the purpose of cooling the motor 107, the electronic device 125, the battery pack 108 and the refrigerant of the air conditioning system through the heat exchanger is achieved.

Further, as shown in Fig. 1 and Fig. 2, the first end of the first coolant flow path 102 is connected with the first end of the second coolant flow path 103, the first end of the third coolant flow path 104, the first end of the first section 1011, the first end of the second section 1012, and the first end of the fourth coolant flow path 113 via a fifth coolant flow path 117 that is selectively turned on or off; or the second end of the first coolant flow path 102 is connected with the port A of the first three-way valve 112, the port C of the second three-way valve 114, and the second end of the fourth coolant flow path 113 via the fifth coolant flow path 117 that is selectively turned on or off. The second heat exchanger 106, the battery pack 108, the motor 107 and the electronic device may be independently cooled through the radiator 115 by controlling the fifth coolant flow path 117 to be turned on or off and the corresponding ports of the first three-way valve 112 and the second three-way valve 114 to be turned on or off.

Specifically, as shown in Fig. 7, when the port B and the port C of the second three-way valve 114 are communicated, the port A, the port B and the port C of the first three-way valve 112 are all disconnected from each other, and the fifth coolant flow path 117 is turned off, the second section 1012 of the coolant loop 101 and the fourth coolant flow path 113 are connected in series to form a loop, so that the low-temperature coolant cooled by the radiator 115 flows into the second heat exchanger 106 and absorbs the heat of the refrigerant in the air conditioning system in the second heat exchanger 106, so as to cool the refrigerant.

When the port A and the port B of the first three-way valve 112 are communicated, the port A, the port B and the port C of the second three-way valve 114 are all disconnected from each other, and the fifth coolant flow path 117 is turned off, the second coolant flow path 103 and the fourth coolant flow path 113 are connected in series to form a loop, so that the low-temperature coolant cooled by the radiator 115 flows into the battery pack 108 to dissipate heat and cool the battery pack 108. During specific implementation, when a temperature value of the battery pack 108 is higher than a first preset value and less than a second preset value, the port A and the port B of the first three-way valve 112 may be communicated, so that the battery pack 108 is subjected to heat dissipation and cooled by the radiator 115; and when the temperature value of the battery pack 108 is higher than the second preset value, the port B and the port C of the first three-way valve 112 may be communicated, so that the cold energy of the air conditioning system is utilized to cool the battery pack 108 through the first heat exchanger 105. That is to say, when a difference between a current temperature value of the battery pack 108 and its suitable working temperature value is small, heat of the battery pack 108 may be dissipated through the radiator 115 to avoid turning on the air conditioning system and save the power of a vehicle; and when the difference between the current temperature value of the battery pack 108 and its suitable working temperature value is large, the battery pack 108 may be cooled by the cold energy of the air conditioning system, so that the temperature of the battery pack 108 can be rapidly lowered. Or, when the temperature of the battery pack 108 rises slowly, heat of the battery pack 108 may be dissipated by the radiator 115, and when the temperature of the battery pack 108 rises rapidly, the battery pack 108 may be cooled by the cold energy of the air conditioning system.

When the port A, the port B and the port C of the first three-way valve 112 are all disconnected from each other, the port A, the port B and the port C of the second three-way valve 114 are all disconnected from each other, and the fifth coolant flow path 117 is communicated, the first coolant flow path 102 and the fourth coolant flow path 113 form a loop, so that the low-temperature coolant cooled by the radiator 115 flows into the motor 107 and the electronic device 125, so as to perform heat dissipation and cooling on the motor 107 and the electronic device 125.

For an example in which the vehicle thermal management system is provided with the fifth coolant flow path 117 and the heater 124, by controlling the fifth coolant flow path 117, the first three-way valve 112 and the second three-way valve 114, a mode of heating the warm air core 111 and the battery pack 108 by the heater 124 may also be implemented. Specifically, as shown in Fig. 10, the port A, the port B and the port C of the second three-way valve 114 are communicated to each other, the port A and the port B of the first three-way valve 112 are communicated, and the fifth coolant flow path 117 is in a turned-off state, the first section 1011 and the second section 1012 of the coolant loop 101 are connected in series to form a loop, and the first section 1011 of the coolant loop 101 and the second coolant flow path 103 are connected in series to form another loop. When the heater 124 is turned on, the high-temperature coolant heated by the heater 124 first flows into a heat exchange core, and the coolant flowing out of an outlet of the heat exchange core is divided into two streams, one stream flows to the second heat exchanger 106, the other stream flows to the battery pack 108 to heat the battery pack 108, and the coolant flowing out of the second heat exchanger 106 and the battery pack 108 is mixed and flows back to the heater 124. In this mode, the air conditioning system may be turned on, and the coolant may exchange heat with the refrigerant of the air conditioning system in the second heat exchanger 106 to absorb the heat of the refrigerant, thereby preheating the coolant that will flow back to the heater 124 for heating.

Optionally, as an embodiment, the fifth coolant flow path 117 is provided with a first on-off valve 118, so as to selectively turn on and turn off the fifth coolant flow path 117. In other embodiments, a stop valve may also be disposed on the fifth coolant flow path 117.

In addition, in order to achieve a hybrid mode that the battery pack 108 is cooled by the cold energy of the air conditioning system and the motor 107, the electronic device 125, and the second heat exchanger 106 are cooled by the radiator 115, and a hybrid mode that the warm air core 111 is heated by heat of the air conditioning system or the heater 124 and the air conditioning system uses the first heat exchanger 105 to recycle waste heat of the motor 107, in an embodiment provided by the invention, as shown in Fig. 1 to Fig. 2, and in an embodiment not being part of the invention as shown in Fig. 3, the first end of the second coolant flow path 103 and the first end of the third coolant flow path 104 are connected with the first end of the first coolant flow path 102 and the first end of the fourth coolant flow path 113 through a second on-off valve 119, and the first end of the first section 1011 and the first end of the second section 1012 are connected with the first end of the first coolant flow path 102 and the first end of the fourth coolant flow path 113 through a third on-off valve 120.

As shown in Fig. 8, when the port B and the port C of the second three-way valve 114 are communicated, the port A and the port C of the second three-way valve 114 are disconnected, the port C and the port B of the first three-way valve 112 are communicated, the port A of the first three-way valve 112 is disconnected from the port B and the port C, the fifth coolant flow path 117 is communicated, the second on-off valve 119 is turned off, and the third on-off valve 120 is turned on, the fourth coolant flow path 113 and the second section 1012 of the coolant loop are connected in series to form a loop, the fourth coolant flow path 113 and the first coolant flow path 102 are connected in series to form another loop, the first coolant flow path 102 and the second section 1012 are connected in parallel with each other, the second coolant flow path 103 and the third coolant flow path 104 are connected in series to form a loop, and the loop is not communicated with the fourth coolant flow path 113, the second section 1012 of the coolant loop, and the first coolant flow path 102, so that the battery pack 108 can be cooled by utilizing the cold energy of the air conditioning system through the first heat exchanger 105, and the motor 107, the electronic device 125, and the second heat exchanger 106 can dissipate heat through the radiator 115.

As shown in Fig. 9, when the port A and the port B of the second three-way valve 114 are communicated, the port A and the port C of the first three-way valve 112 are communicated, the fifth coolant flow path 117 is communicated, the second on-off valve 119 is turned on, and the third on-off valve 120 is turned off, the first section 1011 and the second section 1012 of the coolant loop 101 form a closed loop, the third coolant flow path 104 and the first coolant flow path 102 form a loop, and the two loops do not affect each other, so that a mode that the warm air core 111 is heated by utilizing the heat of the air conditioning system through the heater 124 or the second heat exchanger 106, and the heat of the motor 107 is used to increase the enthalpy of the refrigerant of the air conditioning system through the first heat exchanger 105 is achieved.

Optionally, as shown in Fig. 1 to Fig. 3, a check valve 121 may be disposed at an outlet of the radiator 115 to prevent the coolant from flowing back into the radiator 115.

For an example not according to the invention in which the motor 107 is disposed on the second coolant flow path 103, as shown in Fig. 3, the vehicle thermal management system may further include a short-circuit flow path 122 connected in parallel with the motor 107, and a fourth on-off valve 123 may be disposed on the short-circuit flow path 122. When the motor 107 is disposed on the second coolant flow path 103, the motor 107 and the battery pack 108 are connected in series, when the battery pack 108 needs to be cooled during charging, since the motor 107 is a component that converts electrical energy of the battery pack 108 into mechanical energy so as to drive the vehicle, the motor 107 does not work when the battery pack 108 is charged and has no cooling demand, and at this time, the fourth on-off valve 123 may be turned on to communicate the short-circuit flow path 122. The flow resistance of the short-circuit flow path 122 will be smaller than the flow resistance of the motor 107. At this time, most of the coolant will flow through the short-circuit flow path 122, so that the battery pack 108 can be rapidly cooled in the charging process.

Optionally, for an example in which the motor 107 is disposed on the first coolant flow path 102, the motor 107 and the electronic device 125 may be connected with the first coolant flow path 102 in series in any order, for example, an outlet of the motor 107 may be communicated with an inlet of the electronic device 125, or an outlet of the electronic device 125 may be communicated with an inlet of the motor 107. The invention does not limit the series connection order of the motor 107 and the electronic device 125 on the first coolant flow path 102 herein.

On the third coolant flow path 104, the first water pump 109 and the first heat exchanger 105 may also be connected in series in any order, for example, the coolant outlet of the first heat exchanger 105 and an inlet of the first water pump 109 are communicated, or an outlet of the first water pump 109 and a coolant inlet of the first heat exchanger 105 are communicated.

On the first section 1011 of the coolant loop 101, the heater 124, the warm air core 111, and the second water pump 110 may be connected in series in sequence, or the second water pump 110, the heater 124, and the warm air core 111 may be connected in series in sequence, and the invention does not limit the serial connection order of the heater 124, the warm air core 111, and the second water pump 110 on the first section 1011 of the coolant loop 101.

On the fourth coolant flow path 113, the third water pump 116 and the radiator 115 may be connected in series in any order, for example, an outlet of the third water pump 116 and an inlet of the radiator 115 are communicated, or the outlet of the radiator 115 and an inlet of the third water pump 116 are communicated.

In addition, as mentioned above, the first heat exchanger 105 is simultaneously located in the third coolant flow path 104 and the air conditioning system. During specific implementation, the first heat exchanger 105 may be connected in parallel with an evaporator of the air conditioning system, so that under a refrigeration condition of the air conditioning system, a low-temperature and low-pressure liquid refrigerant may flow into the first heat exchanger 105, heat of the coolant is absorbed in the first heat exchanger 105 to reduce the temperature of the coolant, and thus the coolant with the reduced temperature may be configured to cool the battery pack 108, the motor 107, and the electronic device 125; and under a heating condition of the air conditioning system, since the first heat exchanger 105 is located on the upstream of the compressor of the air conditioning system, the coolant that absorbs heat from the motor 107 and is heated up may increase the enthalpy of the refrigerant about to enter the compressor in the first heat exchanger 105, so that the suction temperature of the compressor is improved, and the low-temperature heating capacity of the air conditioning system is improved. For an example in which the heat of the air conditioning system needs to be used to heat the battery pack 108, an outlet of the compressor of the air conditioning system may be selectively communicated with a refrigerant inlet of the first heat exchanger 105, so that under the heating condition of the air conditioning system, the high-temperature and high-pressure gaseous refrigerant flowing out of the outlet of the compressor may enter the first heat exchanger 105 to increase the temperature of the coolant, and the coolant with the increased temperature may be configured to heat the battery pack 108.

As mentioned above, the second heat exchanger 106 is also simultaneously located in the coolant loop 101 and the air conditioning system. During specific implementation, the second heat exchanger 106 may be connected in parallel with a condenser, or, a refrigerant inlet of the second heat exchanger 106 may be communicated with the outlet of the compressor (that is, no condenser is disposed, and the location of the condenser is replaced with the second heat exchanger 106), so that the high-temperature and high-pressure gaseous refrigerant discharged from the outlet of the compressor can flow into the second heat exchanger 106 to release heat to the coolant in the second heat exchanger 106 to increase the temperature of the coolant, and the coolant with the increased temperature may be configured to heat the warm air core 111, so that heating of the passenger compartment is achieved.

The following will take the example in Fig. 1 as an example, and with reference to Fig. 4 to Fig. 10, main working modes of the vehicle thermal management system provided by the invention, and cycle processes and principles in the corresponding working modes are described in detail.

Mode 1: a waste heat recycling mode. In this mode, as shown in Fig. 4, the port A and the port C of the first three-way valve 112 are communicated, and the port A, the port B and the port C of the second three-way valve 114 are disconnected from each other, the first on-off valve 118 is turned on, the second on-off valve 119 is turned on, the third on-off valve 120 is turned off, and the first water pump 109 is opened, so that the first coolant flow path 102 and the third coolant flow path 104 are connected in series to form a loop, and the coolant may circulate in the loop. In this mode, the air conditioning system may be in the heating condition, in the first heat exchanger 105, the low-temperature refrigerant exchanges heat with the high-temperature coolant that has absorbed the heat of the motor 107 and the electronic device 125, and the temperature of the refrigerant increases and flows out of the refrigerant outlet of the first heat exchanger 105 to return to the compressor, thereby improving the suction temperature and suction pressure of the compressor; and the low-temperature coolant after releasing heat to the refrigerant flows out of the coolant outlet of the first heat exchanger 105, and returns to the motor 107 and the electronic device 125 to continue to absorb the heat of the motor 107 and the electronic device 125. When the ambient temperature is low, the waste heat of the motor 107 and the electronic device 125 is utilized to heat the refrigerant of the air conditioning system so as to improve the suction temperature and suction volume of the compressor, so that the heating capacity of the air conditioning system in the low temperature environments is improved, and the heating demand of the passenger compartment is met.

Mode 2: an active battery pack cooling or heating mode. In this mode, as shown in Fig. 5, the port B and the port C of the first three-way valve 112 are communicated, the port A, the port B and the port C of the second three-way valve 114 are disconnected from each other, the first on-off valve is turned off, the second on-off valve 119 is turned off, the third on-off valve 120 is turned off, and the first water pump 109 is opened, so that the second coolant flow path 103 and the third coolant flow path 104 are connected in series to form a loop, and the coolant may circulate in the loop. When the battery pack 108 has a cooling demand, the air conditioning system may be in the refrigeration condition, and the low-temperature refrigerant exchanges heat with the coolant in the first heat exchanger 105 to reduce the temperature of the coolant, so that the low-temperature coolant flows out of the coolant outlet of the first heat exchanger 105, and flows to the battery pack 108 to absorb the heat of the battery pack 108, so as to achieve the cooling of the battery pack 108; and when the battery pack 108 has a heating demand, the air conditioning system may be in the heating condition, the high-temperature refrigerant exchanges heat with the coolant in the first heat exchanger 105 to increase the temperature of the coolant, so that the high-temperature coolant flows out of the coolant outlet of the first heat exchanger 105, and flows to the battery pack 108 to release heat to the battery pack 108, so as to achieve the heating of the battery pack 108.

Mode 3: a mode of heating the passenger compartment by the air conditioning system. In this mode, as shown in Fig. 6, the port A, the port B and the port C of the first three-way valve 112 are all disconnected, the port A and the port B of the second three-way valve 114 are communicated, the first on-off valve 118 is turned off, the second on-off valve 119 is turned off, the third on-off valve 120 is turned off, the second water pump 110 is opened, and the heater 124 is turned off, so that the coolant loop 101 is the closed loop. In this mode, the high-temperature refrigerant discharged from the compressor of the air conditioning system may enter the second heat exchanger 106, the high-temperature refrigerant and the low-temperature coolant conduct heat exchange in the second heat exchanger 106, the temperature of the coolant increases, the high-temperature coolant flows out of the coolant outlet of the second heat exchanger 106 and flows into the warm air core 111, and by blowing air to the warm air core 111, the air passing through the warm air core 111 may be heated and flow into the passenger compartment, and the heating of the passenger compartment is achieved.

Here, it should be noted that the port A, the port B and the port C of the first three-way valve 112 are all disconnected, the port A and the port B of the second three-way valve 114 are communicated, the first on-off valve 118 is turned off, the second on-off valve 119 is turned off, the third on-off valve 120 is turned off, the second water pump 110 is opened, the heater 124 is turned on, and the refrigerant of the air conditioning system does not flow through the second heat exchanger 106, a mode of heating the passenger compartment by the heater may be achieved, which is similar to Mode 3, and will not be repeated herein.

Mode 4: a passive cooling mode. As shown in Fig. 7, in this mode, the port A and the port B of the first three-way valve 112 are communicated, the port B and the port C of the second three-way valve 114 are communicated, the first on-off valve 118 is turned on, the second on-off valve 119 is turned on, the third on-off valve 120 is turned on, and the third water pump 116 is opened, so that the fourth coolant flow path 113 and the second section 1012 of the coolant loop 101 form a loop, the fourth coolant flow path 113 and the second coolant flow path 103 forms another loop, the fourth coolant flow path 113 and the first coolant flow path 102 form yet another loop, and the second section 1012 of the coolant loop 101, the second coolant flow path 103, and the first coolant flow path 102 are connected in parallel with each other. In this mode, the low-temperature coolant flowing out of the outlet of the radiator 115 is divided into three streams, one stream flows into the second heat exchanger 106 and exchanges heat with the refrigerant of the air conditioning system in the second heat exchanger 106 to reduce the temperature of the refrigerant, one stream flows into the battery pack 108 and absorbs the heat of the battery pack 108 to reduce the temperature of the battery pack 108, one stream flows into the motor 107 and the electronic device 125 and absorbs the heat of the motor 107 and the electronic device 125 to reduce the temperature of the motor 107 and the electronic device 125, and the high-temperature coolant flowing out of the outlet of the electronic device 125 and the high-temperature coolant flowing out of an outlet of the battery pack 108 and the coolant outlet of the second heat exchanger 106 converge and return to the radiator 115, so as to dissipate heat to the outside air. In this mode, the refrigerant of the air conditioning system, the battery pack 108, the motor 107 and the electronic device 125 can be cooled and subjected to heat dissipation through the radiator 115.

Here, it should be noted that on the basis of Mode 4, the port A, the port B and the port C of the first three-way valve 112 are disconnected from each other, and the first on-off valve 118 and the second on-off valve 119 are turned off, so that an independent passive cooling mode of the refrigerant of the air conditioning system through the second heat exchanger 106 may be achieved; the port A, the port B and the port of the second three-way valve 114 are disconnected from each other, and the first on-off valve 118 and the third on-off valve 120 are turned off, so that an independent passive cooling mode of the battery pack 108 through the radiator 115 may be achieved; and the port A, the port B and the port C of the first three-way valve 112 are disconnected from each other, the port A, the port B and the port C of the second three-way valve 114 are disconnected from each other, and the second on-off valve 119 and the third on-off valve 120 are turned off, so that an independent passive cooling mode in which the motor 107 and the electronic device 125 are cooled by the radiator 115 may be achieved.

Mode 5: a hybrid mode of passive cooling of the second heat exchanger, the motor and the electronic device and active cooling of the battery pack. In this mode, as shown in Fig. 8, the port B and the port C of the first three-way valve 112 are communicated, the port B and the port C of the second three-way valve 114 are communicated, the first on-off valve 118 is turned on, the second on-off valve 119 is turned off, the third on-off valve 120 is turned on, the first water pump 109 is opened, and the third water pump 116 is opened, so that the fourth coolant flow path 113 and the second section 1012 of the coolant loop 101 form a loop, the fourth coolant flow path 113 and the first coolant flow path 102 form another loop, and the second section 1012 and the first coolant flow path 102 are connected in parallel with each other, the first coolant flow path 102 and the second coolant flow path 103 form a loop, and the loop is not communicated with the fourth coolant flow path 113, the second section 1012 of the coolant loop 101, and the first coolant flow path 102. In this mode, the low-temperature coolant flowing out of the outlet of the radiator 115 is divided into two streams, one stream flows into the second heat exchanger 106 and exchanges heat with the refrigerant of the air conditioning system in the second heat exchanger 106 to reduce the temperature of the refrigerant, the other stream flows into the motor 107 and the electronic device 125 and absorbs the heat of the motor 107 and the electronic device 125 to reduce the temperature of the motor 107 and the electronic device 125, and the high-temperature coolant flowing out of the outlet of the electronic device 125 and the high-temperature coolant flowing out of the coolant outlet of the second heat exchanger 106 converge and return to the radiator 115 to dissipate heat to the outside air; and in the first heat exchanger 105, heat exchange is performed on the refrigerant of the air conditioning system and the high-temperature coolant after absorbing heat at the battery pack 108, the temperature of the coolant is reduced, and the low-temperature coolant flows out of the coolant outlet of the first heat exchanger 105 and absorbs the heat of the battery pack 108 at the battery pack 108 so as to cool the battery pack 108.

Mode 6: a hybrid mode of heating the passenger compartment by the air conditioning system and recycling waste heat. In this mode, as shown in Fig. 9, the port A and the port C of the first three-way valve are communicated, the port A and the port B of the second three-way valve 114 are communicated, the first on-off valve 118 is turned on, the second on-off valve 119 is turned on, the third on-off valve 120 is turned off, the first water pump 109 is opened, the second water pump 110 is opened, and the heater 124 is turned off, so that the coolant loop 101 is the closed loop, the first coolant flow path 102 and the third coolant flow path 104 forms a loop, and the coolant loop 101 and the loop formed by the first coolant flow path 102 and the third coolant flow path 104 are independent of each other and are not communicated with each other. In this mode, in the first heat exchanger 105, the refrigerant of the air conditioning system exchanges heat with the high-temperature coolant that has absorbed the heat at the motor 107 and the electronic device 125, the temperature of the refrigerant increases, the temperature of the coolant is reduced, the refrigerant with the increased temperature returns to the compressor, the suction temperature and suction pressure of the compressor are increased, and the coolant with the reduced temperature flows to the motor 107 and the electronic device 125, and continues to absorb the heat of the motor 107 and the electronic device 125, so that the purpose of using the heat of the motor 107 and the electronic device 125 to increase the enthalpy of the refrigerant of the air conditioning system is achieved. In the second heat exchanger 106, the high-temperature refrigerant of the air conditioning system exchanges heat with the low-temperature coolant, the temperature of the coolant increases, and the high-temperature coolant flowing out of the coolant outlet of the second heat exchanger 106 flows into the warm air core 111, and by blowing air to the warm air core 111, the air passing through the warm air core 111 is heated and flows into the passenger compartment, thereby achieving the heating of the passenger compartment.

Here, it should be noted that, as shown in Fig. 9, when the port A and the port C of the first three-way valve are communicated, the port A and the port B of the second three-way valve 114 are communicated, the first on-off valve 118 is turned on, the second on-off valve 119 is turned on, the third on-off valve 120 is turned off, the first water pump 109 is opened, the second water pump 110 is opened, the heater 124 is turned on, and the refrigerant of the air conditioning system does not flow through the second heat exchanger 106, a hybrid mode in which the heater 124 heats the passenger compartment and waste heat is recycled may be achieved, which is similar to Mode 6, and will not be repeated herein.

Mode 7: a mode of heating the passenger compartment and the battery pack by the heater. In this mode, as shown in Fig. 10, the port A and the port B of the first three-way valve 112 are communicated, and the port A, the port B and the port C of the second three-way valve 114 are communicated to each other, the first on-off valve 118 is turned off, the second on-off valve 119 is turned on, the third on-off valve 120 is turned on, and the second water pump 110 is opened, so that the first section 1011 and the second section 1012 of the coolant loop 101 form a loop, the first section 1011 of the coolant loop 101 and the second coolant flow path 103 form another loop, and the second section 1012 of the coolant loop 101 and the second coolant flow path 103 are connected in parallel with each other. In this mode, the heater 124 heats the temperature of the coolant, the heated high-temperature coolant flows into the warm air core 111, and by blowing air to the warm air core 111, the air passing through the warm core 111 is heated and flows into the passenger compartment to achieve the heating of the passenger compartment. The medium-temperature coolant flowing out of the outlet of the warm air core 111 is divided into two streams, one stream flows into the battery pack 108 to release heat to the battery pack 108 to heat the battery pack 108, the other stream flows into the second heat exchanger 106, the coolant flowing out of the outlet of the battery pack 108 and the coolant flowing out of the coolant outlet of the second heat exchanger 106 converge and return to the heater 124 again. Here, it should be noted that since the suitable operating temperature range of the battery pack 108 is smaller than the temperature of the coolant required by the warm air core 111 to achieve the heating of the passenger compartment, therefore, after the high-temperature coolant releases heat in the warm air core 111, the residual heat is sufficient to heat the battery pack 108.

Here, the main working modes of the vehicle thermal management system of the invention are described in detail above, the vehicle thermal management system of the invention is not limited to achieving the above working modes, and other working modes may be implemented.

To sum up, the vehicle thermal management system provided by the invention can achieve a plurality of working modes that the motor 107 and/or the battery pack 108 dissipate/dissipates heat through the radiator 115, the battery pack 108 is cooled or heated by the cold energy or heat of the air conditioning system, the battery pack 108 is heated by the heater 124, the waste heat of the motor 107 increases the enthalpy of the refrigerant of the air conditioning system, the heat of the air conditioning system is used to achieve the heating of the passenger compartment, or the passenger compartment is heated by the heater 124. The heat collection planning of the whole vehicle is reasonable, the waste of energy is avoided, the system loop is simple, the quantities of pipelines, valves, joints and other components can be effectively reduced, and the cost is reduced.

According to another aspect of the invention, a vehicle is provided, including the above vehicle thermal management system.

## Claims

1. A vehicle thermal management system, comprising a coolant loop (101), a first coolant flow path (102), a second coolant flow path (103), a third coolant flow path (104), a first heat exchanger (105) and a second heat exchanger (106);
a first end of the first coolant flow path (102), a first end of the second coolant flow path (103), and a first end of the third coolant flow path (104) are connected with each other, and a second end of the third coolant flow path (104) is selectively connected with a second end of the first coolant flow path (102) or a second end of the second coolant flow path (103);
a battery pack (108) is disposed on the second coolant flow path (103), a first water pump (109) is disposed on the third coolant flow path (104), the first heat exchanger (105) is simultaneously disposed on the third coolant flow path (104) and an air conditioning system of the vehicle thermal management system, the second heat exchanger (106) is simultaneously disposed on the coolant loop (101) and the air conditioning system, and a second water pump (110) and a warm air core (111) are further disposed on the coolant loop (101);
the vehicle thermal management system further comprises a first three-way valve (112), a port A of the first three-way valve (112) is connected with the second end of the first coolant flow path (102), a port B of the first three-way valve (112) is connected with the second end of the second coolant flow path (103), and a port C of the first three-way valve (112) is connected with the second end of the third coolant flow path (104);
**characterized in that**,
a motor (107) is disposed on the first coolant flow path (102);
the vehicle thermal management system further comprises a fourth coolant flow path (113) and a second three-way valve (114), and a radiator (115) and a third water pump (116) are disposed on the fourth coolant flow path (113);
the second three-way valve (114) is disposed on the coolant loop (101), the coolant loop (101) comprises a first section (1011) and a second section (1012), the second heat exchanger (106) is simultaneously disposed on the second section (1012) and the air conditioning system, the warm air core (111) and the second water pump (110) are disposed on the first section (1011), a first end of the first section (1011) is connected with a first end of the second section (1012), a second end of the first section (1011) is connected with a port A of the second three-way valve (114), a second end of the second section (1012) is connected with a port B of the second three-way valve (114), a first end of the fourth coolant flow path (113) is connected with the first end of the first section (1011), the first end of the second section (1012), the first end of the third coolant flow path (104), the first end of the second coolant flow path (103) and the first end of the first coolant flow path (102), and a second end of the fourth coolant flow path (113) is connected with a port C of the second three-way valve (114), the port A of the first three-way valve (112) and the second end of the first coolant flow path (102); and
the first end of the second coolant flow path (103) and the first end of the third coolant flow path (104) are connected with the first end of the first coolant flow path (102) and the first end of the fourth coolant flow path (113) through a second on-off valve (119), and the first end of the first section (1011) and the first end of the second section (1012) are connected with the first end of the first coolant flow path (102) and the first end of the fourth coolant flow path (113) through a third on-off valve (120).

2. The vehicle thermal management system according to claim 1, wherein the first end of the first coolant flow path (102) is connected with the first end of the second coolant flow path (103), the first end of the third coolant flow path (104), the first end of the first section (1011), the first end of the second section (1012) and the first end of the fourth coolant flow path (113) via a fifth coolant flow path (117) that is selectively turned on or off; or,
the second end of the first coolant flow path (102) is connected with the port A of the first three-way valve (112), the port C of the two-three-way valve (114) and the second end of the fourth coolant flow path (113) via the fifth coolant flow path (117) that is selectively turned on or off.

3. The vehicle thermal management system according to claim 2, wherein a first on-off valve (118) is disposed on the fifth coolant flow path (117).

4. The vehicle thermal management system according to claim 1, wherein a check valve (121) is disposed at an outlet of the radiator (115).

5. The vehicle thermal management system according to any one of claims 1-4, wherein a heater (124) is further disposed on the coolant loop (101).

6. The vehicle thermal management system according to any one of claims 1-4, wherein an electronic device (125) is further disposed on the first coolant flow path (102).

7. The vehicle thermal management system according to claim 6, wherein the electronic device (125) comprises at least one of a charger, a motor controller, or a DC-DC converter.

8. A vehicle, comprising the vehicle thermal management system described according to any one of claims 1-7.

## Patentansprüche

1. Thermomanagementsystem eines Fahrzeugs, umfassend einen Kühlmittelkreislauf (101), einen ersten Kühlmittelströmungspfad (102), einen zweiten Kühlmittelströmungspfad (103), einen dritten Kühlmittelströmungspfad (104), einen ersten Wärmetauscher (105) und einen zweiten Wärmetauscher (106);
wobei ein erstes Ende des ersten Kühlmittelströmungspfads (102), ein erstes Ende des zweiten Kühlmittelströmungspfads (103) und ein erstes Ende des dritten Kühlmittelströmungspfads (104) miteinander verbunden sind, und ein zweites Ende des dritten Kühlmittelströmungspfads (104) wahlweise mit einem zweiten Ende des ersten Kühlmittelströmungspfads (102) oder einem zweiten Ende des zweiten Kühlmittelströmungspfads (103) verbunden ist;
wobei ein Batteriepack (108) an dem zweiten Kühlmittelströmungspfad (103) angeordnet ist, eine erste Wasserpumpe (109) an dem dritten Kühlmittelströmungspfad (104) angeordnet ist, der erste Wärmetauscher (105) gleichzeitig an dem dritten Kühlmittelströmungspfad (104) und einer Klimaanlage des Thermomanagementsystems eines Fahrzeugs angeordnet ist, der zweite Wärmetauscher (106) gleichzeitig an dem Kühlmittelkreislauf (101) und der Klimaanlage angeordnet ist und eine zweite Wasserpumpe (110) und ein Warmluftkern (111) ferner an dem Kühlmittelkreislauf (101) angeordnet sind;
wobei das Thermomanagementsystem eines Fahrzeugs ferner ein erstes Dreiwegeventil (112) umfasst, ein Anschluss A des ersten Dreiwegeventils (112) mit dem zweiten Ende des ersten Kühlmittelströmungspfads (102) verbunden ist, ein Anschluss B des ersten Dreiwegeventils (112) mit dem zweiten Ende des zweiten Kühlmittelströmungspfads (103) verbunden ist und ein Anschluss C des ersten Dreiwegeventils (112) mit dem zweiten Ende des dritten Kühlmittelströmungspfads (104) verbunden ist;
**dadurch gekennzeichnet, dass**
ein Motor (107) in dem ersten Kühlmittelströmungspfad (102) angeordnet ist;
das Thermomanagementsystem eines Fahrzeugs ferner einen vierten Kühlmittelströmungspfad (113) und ein zweites Dreiwegeventil (114) umfasst, und ein Kühler (115) und eine dritte Wasserpumpe (116) an dem vierten Kühlmittelströmungspfad (113) angeordnet sind;
das zweite Dreiwegeventil (114) an dem Kühlmittelkreislauf (101) angeordnet ist, der Kühlmittelkreislauf (101) einen ersten Abschnitt (1011) und einen zweiten Abschnitt (1012) umfasst, der zweite Wärmetauscher (106) gleichzeitig an dem zweiten Abschnitt (1012) und der Klimaanlage angeordnet ist, der Warmluftkern (111) und die zweite Wasserpumpe (110) an dem ersten Abschnitt (1011) angeordnet sind, ein erstes Ende des ersten Abschnitts (1011) mit einem ersten Ende des zweiten Abschnitts (1012) verbunden ist, ein zweites Ende des ersten Abschnitts (1011) mit einem Anschluss A des zweiten Dreiwegeventils (114) verbunden ist, ein zweites Ende des zweiten Abschnitts (1012) mit einem Anschluss B des zweiten Dreiwegeventils (114) verbunden ist, ein erstes Ende des vierten Kühlmittelströmungspfads (113) mit dem ersten Ende des ersten Abschnitts (1011), dem ersten Ende des zweiten Abschnitts (1012), dem ersten Ende des dritten Kühlmittelströmungspfads (104), dem ersten Ende des zweiten Kühlmittelströmungspfads (103) und dem erste Ende des ersten Kühlmittelströmungspfads (102) verbunden ist, und ein zweites Ende des vierten Kühlmittelströmungspfads (113) mit einem Anschluss C des zweiten Dreiwegeventils (114), dem Anschluss A des ersten Dreiwegeventils (112) und dem zweiten Ende des ersten Kühlmittelströmungspfads (102) verbunden ist; und
das erste Ende des zweiten Kühlmittelströmungspfads (103) und das erste Ende des dritten Kühlmittelströmungspfads (104) mit dem ersten Ende des ersten Kühlmittelströmungspfads (102) und dem ersten Ende des vierten Kühlmittelströmungspfads (113) durch ein zweites Ein-Aus-Ventil (119) verbunden sind, und das erste Ende des ersten Abschnitts (1011) und das erste Ende des zweiten Abschnitts (1012) mit dem ersten Ende des ersten Kühlmittelströmungspfads (102) und dem ersten Ende des vierten Kühlmittelströmungspfads (113) durch ein drittes Ein-Aus-Ventil (120) verbunden sind.

2. Thermomanagementsystem eines Fahrzeugs nach Anspruch 1, wobei das erste Ende des ersten Kühlmittelströmungspfads (102) mit dem ersten Ende des zweiten Kühlmittelströmungspfads (103), dem ersten Ende des dritten Kühlmittelströmungspfads (104), dem ersten Ende des ersten Abschnitts (1011), dem ersten Ende des zweiten Abschnitts (1012) und dem ersten Ende des vierten Kühlmittelströmungspfads (113) über einen fünften Kühlmittelströmungspfad (117) verbunden ist, der wahlweise ein- oder ausgeschaltet ist; oder,
das zweite Ende des ersten Kühlmittelströmungspfads (102) mit dem Anschluss A des ersten Dreiwegeventils (112), dem Anschluss C des Zwei-Dreiwegeventils (114) und dem zweiten Ende des vierten Kühlmittelströmungspfads (113) über den fünften Kühlmittelströmungspfad (117) verbunden ist, der wahlweise ein- oder ausgeschaltet ist.

3. Thermomanagementsystem eines Fahrzeugs nach Anspruch 2, wobei ein erstes Ein-/Aus-Ventil (118) an dem fünften Kühlmittelströmungspfad (117) angeordnet ist.

4. Thermomanagementsystem eines Fahrzeugs nach Anspruch 1, wobei ein Rückschlagventil (121) an einem Auslass des Kühlers (115) angeordnet ist.

5. Thermomanagementsystem eines Fahrzeugs nach einem der Ansprüche 1 bis 4, wobei ferner eine Heizung (124) an dem Kühlmittelkreislauf (101) angeordnet ist.

6. Thermomanagementsystem eines Fahrzeugs nach einem der Ansprüche 1 bis 4, wobei ferner eine elektronische Vorrichtung (125) an dem ersten Kühlmittelströmungspfad (102) angeordnet ist.

7. Thermomanagementsystem eines Fahrzeugs nach Anspruch 6, wobei die elektronische Vorrichtung (125) mindestens eines von einem Ladegerät, einer Motorsteuerung oder eines Gleichstrom-Gleichstrom-Wandlers umfasst.

8. Fahrzeug, umfassend das Thermomanagementsystem, das nach einem der Ansprüche 1 bis 7 beschrieben ist.

## Revendications

1. Système de gestion thermique d'un véhicule, comprenant une boucle de liquide de refroidissement (101), une première voie d'écoulement de liquide de refroidissement (102), une deuxième voie d'écoulement de liquide de refroidissement (103), une troisième voie d'écoulement de liquide de refroidissement (104), un premier échangeur de chaleur (105) et un second échangeur de chaleur (106) ;
une première extrémité de la première voie d'écoulement de liquide de refroidissement (102), une première extrémité de la deuxième voie d'écoulement de liquide de refroidissement (103), et une première extrémité de la troisième voie d'écoulement de liquide de refroidissement (104) sont reliées entre elles, et une seconde extrémité de la troisième voie d'écoulement de liquide de refroidissement (104) est sélectivement reliée à une seconde extrémité de la première voie d'écoulement de liquide de refroidissement (102) ou à une seconde extrémité de la deuxième voie d'écoulement de liquide de refroidissement (103) ;
un bloc-batterie (108) est disposé sur la deuxième voie d'écoulement de liquide de refroidissement (103), une première pompe à eau (109) est disposée sur la troisième voie d'écoulement de liquide de refroidissement (104), le premier échangeur de chaleur (105) est disposé simultanément sur la troisième voie d'écoulement de liquide de refroidissement (104) et un système de climatisation du système de gestion thermique de véhicule, le second échangeur de chaleur (106) est disposé simultanément sur la boucle de liquide de refroidissement (101) et le système de climatisation, et une deuxième pompe à eau (110) et un noyau d'air chaud (111) sont en outre disposés sur la boucle de liquide de refroidissement (101) ;
le système de gestion thermique de véhicule comprend en outre une première vanne à trois voies (112), un orifice A de la première vanne à trois voies (112) est relié à la seconde extrémité de la première voie d'écoulement de liquide de refroidissement (102), un orifice B de la première vanne à trois voies (112) est relié à la seconde extrémité de la deuxième voie d'écoulement de liquide de refroidissement (103), et un orifice C de la première vanne à trois voies (112) est relié à la seconde extrémité de la troisième voie d'écoulement de liquide de refroidissement (104) ;
**caractérisé en ce que**,
un moteur (107) est disposé sur la première voie d'écoulement de liquide de refroidissement (102) ;
le système de gestion thermique de véhicule comprend en outre une quatrième voie d'écoulement de liquide de refroidissement (113) et une deuxième vanne à trois voies (114), et un radiateur (115) et une troisième pompe à eau (116) sont disposés sur la quatrième voie d'écoulement de liquide de refroidissement (113) ;
la deuxième vanne à trois voies (114) est disposée sur la boucle de liquide de refroidissement (101), la boucle de liquide de refroidissement (101) comprend une première section (1011) et une seconde section (1012), le second échangeur de chaleur (106) est disposé simultanément sur la seconde section (1012) et le système de climatisation, le noyau d'air chaud (111) et la deuxième pompe à eau (110) sont disposés sur la première section (1011), une première extrémité de la première section (1011) est reliée à une première extrémité de la seconde section (1012), une seconde extrémité de la première section (1011) est reliée à un orifice A de la deuxième vanne à trois voies (114), une seconde extrémité de la seconde section (1012) est reliée à un orifice B de la deuxième vanne à trois voies (114), une première extrémité de la quatrième voie d'écoulement de liquide de refroidissement (113) est reliée à la première extrémité de la première section (1011), la première extrémité de la seconde section (1012), la première extrémité de la troisième voie d'écoulement de liquide de refroidissement (104), la première extrémité de la deuxième voie d'écoulement de liquide de refroidissement (103) et la première extrémité de la première voie d'écoulement de liquide de refroidissement (102), et une seconde extrémité de la quatrième voie d'écoulement de liquide de refroidissement (113) est reliée à un orifice C de la deuxième vanne à trois voies (114), l'orifice A de la première vanne à trois voies (112) et la seconde extrémité de la première voie d'écoulement de liquide de refroidissement (102) ; et
la première extrémité de la deuxième voie d'écoulement de liquide de refroidissement (103) et la première extrémité de la troisième voie d'écoulement de liquide de refroidissement (104) sont reliées à la première extrémité de la première voie d'écoulement de liquide de refroidissement (102) et la première extrémité de la quatrième voie d'écoulement de liquide de refroidissement (113) par l'intermédiaire d'une deuxième vanne tout ou rien (119), et la première extrémité de la première section (1011) et la première extrémité de la seconde section (1012) sont reliées à la première extrémité de la première voie d'écoulement de liquide de refroidissement (102) et la première extrémité de la quatrième voie d'écoulement de liquide de refroidissement (113) par l'intermédiaire d'une troisième vanne tout ou rien (120).

2. Système de gestion thermique de véhicule selon la revendication 1, dans lequel la première extrémité de la première voie d'écoulement de liquide de refroidissement (102) est reliée à la première extrémité de la deuxième voie d'écoulement de liquide de refroidissement (103), la première extrémité de la troisième voie d'écoulement de liquide de refroidissement (104), la première extrémité de la première section (1011), la première extrémité de la seconde section (1012) et la première extrémité de la quatrième voie d'écoulement de liquide de refroidissement (113) par l'intermédiaire d'une cinquième voie d'écoulement de liquide de refroidissement (117) qui est activée ou désactivée de manière sélective; ou,
la seconde extrémité de la première voie d'écoulement de liquide de refroidissement (102) est reliée à l'orifice A de la première vanne à trois voies (112), l'orifice C de la deuxième vanne à trois voies (114) et la seconde extrémité de la quatrième voie d'écoulement de liquide de refroidissement (113) par l'intermédiaire de la cinquième voie d'écoulement de liquide de refroidissement (117) qui est activée ou désactivée de manière sélective.

3. Système de gestion thermique de véhicule selon la revendication 2, dans lequel une première vanne tout ou rien (118) est disposée sur la cinquième voie d'écoulement de liquide de refroidissement (117).

4. Système de gestion thermique de véhicule selon la revendication 1, dans lequel un clapet antiretour (121) est disposé au niveau d'une sortie du radiateur (115).

5. Système de gestion thermique de véhicule selon l'une quelconque des revendications 1 à 4, dans lequel un réchauffeur (124) est en outre disposé sur la boucle de liquide de refroidissement (101).

6. Système de gestion thermique de véhicule selon l'une quelconque des revendications 1 à 4, dans lequel un dispositif électronique (125) est en outre disposé sur la première voie d'écoulement de liquide de refroidissement (102).

7. Système de gestion thermique de véhicule selon la revendication 6, dans lequel le dispositif électronique (125) comprend au moins l'un parmi un chargeur, un dispositif de commande de moteur, ou un convertisseur CC-CC.

8. Véhicule, comprenant le système de gestion thermique de véhicule décrit selon l'une quelconque des revendications 1 à 7.
